# EUROPÄISCHE PATENTSCHRIFT

(11) **EP 1 114 500 B1**
(45) Veröffentlichungstag und Bekanntmachung des Hinweises auf die Patenterteilung: **02.05.2003**
(21) Anmeldenummer: 99969545.5
(22) Anmeldetag: 13.09.1999
(51) Int. Cl.: H02K 1/14, H02K 15/02, H02K 15/12

(54) **ELEKTROMOTOR**
ELECTRIC MOTOR
MOTEUR ELECTRIQUE

(30) Priorität: 18.09.1998 DE 19842948
(43) Veröffentlichungstag der Anmeldung: 11.07.2001
(73) Patentinhaber: SIEMENS AKTIENGESELLSCHAFT, 80333 München (DE)
(72) Erfinder: PAWELLEK, Jürgen, D-97618 Unsleben (DE); SCHULZ, Udo, D-97616 Bad Neustadt (DE); VOLLMER, Rolf, D-36129 Gersfeld (DE)
(86) Internationale Anmeldenummer: DE9902890
(87) Internationale Veröffentlichungsnummer: WO00017986

(56) Entgegenhaltungen:
- EP-A- 0 849 857
- PATENT ABSTRACTS OF JAPAN vol. 013, no. 018 (E-704), 17. Januar 1989 (1989-01-17) -& JP 63 224637 A (MATSUSHITA SEIKO CO LTD), 19. September 1988 (1988-09-19)
- PATENT ABSTRACTS OF JAPAN vol. 017, no. 253 (E-1367), 19. Mai 1993 (1993-05-19) -& JP 04 372552 A (MITSUI HIGH TEC INC), 25. Dezember 1992 (1992-12-25)
- PATENT ABSTRACTS OF JAPAN vol. 014, no. 099 (E-0893), 22. Februar 1990 (1990-02-22) -& JP 01 303029 A (MATSUSHITA SEIKO CO LTD), 6. Dezember 1989 (1989-12-06)
- PATENT ABSTRACTS OF JAPAN vol. 017, no. 261 (E-1369), 21. Mai 1993 (1993-05-21) -& JP 05 003648 A (MITSUI HIGH TEC INC), 8. Januar 1993 (1993-01-08)

## Beschreibung

Die Erfindung betrifft ein Blechpaket eines Stators eines Elektromotors und dessen Herstellverfahren.

Geblechte oder lamellierte Eisenkörper dienen zur Führung des magnetischen Feldes.

Aus der Druckschrift GM 18 82 073 ist ein geblechter Schaltmagnet bekannt, dessen Blechlamellen einseitig mit vorzugsweise kreisförmigen Eindrückungen derart versehen sind, daß auf ihrer entgegengesetzten Seite Vorsprünge gebildet werden und die Blechlamellen durch Ineinandergreifen ihrer Eindrückungen und Vorsprünge zu einem Blechpaket für den Schaltmagneten zusammensetzbar sind.

Außerdem ist aus den japanischen Entgegenhaltungen JP-A-63224637 und JP-A-04372552 ein Elektromotor bekannt, der einen Stator aufweist, der zweiteilig aufgebaut ist, so dass Pole mit ihren Polschuhen eine Einheit bilden und das Statorblechpaket die andere Einheit. Die Pole sind dabei zumindest abschnittsweise in Umfangsrichtung miteinander verbunden. Durch den konstruktiven Aufbau dieser Elektromotoren treten Streuverluste im Bereich der Stege auf.

Aus der EP-A-0 849 857 A1 ist ein Stator für elektrodynamische Maschinen bekannt, der ein Jochblechpaket und Pole aufweist, die aneinandergefügt Statornuten ergeben. Dabei werden die am Jochblechpaket befestigten Pole vorab mit extern bewickelten Polspulen versehen. Dabei würden die Streustege dadurch vermindert, dass die Ständerbohrung ausgedreht wird. Damit wird das Herstellverfahren unnötig kompliziert und es ist nicht ausgeschlossen, dass Späne den späteren Betrieb des Elektromotors beeinträchtigen.

Schwierig ist es damit eine optimale Ausrichtung der Blechlamellen zu erreichen, mit der sich eine akzeptable gegenseitige Winkelstellung einstellt, die die magnetischen Eigenschaften und damit das Betriebsverhalten des Elektromotors nicht beeinträchtigt. Außerdem entstehen dadurch Probleme beim Einsetzen der Wicklungen.

Ausgehend davon, liegt der Erfindung die Aufgabe zugrunde, eine Aufbauform eines Blechpakets für einen Stator eines Elektromotors zu schaffen, durch die die Fertigung vereinfacht und verbilligt werden kann und dabei die magnetischen Eigenschaften vergleichbarer Elektromotoren erreicht.

Die Lösung der gestellten Aufgabe gelingt durch einen Elektromotor, der folgende Merkmale aufweist:
a) mindestens ein durch aufeinandergeschichteten Blechlamellen gebildetes Blechpaket eines Stators,
b) aus mechanischen einzelnen Polen und in Umfangsrichtung des Stators zusammenhängenden Polen bestehende Blechlamellen, mit zumindest einem Polschaft und wenigstens einem einem Rotor zugewandten Polschuh,
c) Eindrückungen der Blechlamellen derart, daß die entgegengesetzten Seiten der Blechlamellen Vorsprünge aufweisen und dadurch die Blechlamellen durch Ineinandergreifen ihrer Eindrücke und Vorsprünge das Blechpaket des Stators bilden,
d) Wicklungen der mechanischen Pole des Blechpakets des Stators,
e) Stege zwischen den Polen, die die zusammenhängenden mechanischen Pole in Umfangsrichtung verbinden,
f) die Pole mit Verbindungssteg weisen eine magnetisch leitfähige Verbindung im Bereich ihrer Polschuhe auf,
g) axiale Zusammensetzung der Blechlamellen des Blechpakets des Stators weist einen vorgebbarer Wechsel von Polen mit Verbindungssteg und Polen ohne Verbindungssteg auf.

Ein derartiger Elektromotor ist nach folgendem Verfahren hergestellt:
a) Herstellung der mechanischen einzelnen Pole und/oder der in Umfangsrichtung zusammenhängenden Pole durch Stanzen im Folgeschnittwerkzeug,
b) die durch Stanzen gebildeten Blechlamellen werden in einer vorgebbaren Reihenfolge paketiert,
c) die nach außen und/oder innen im wesentlichen radial abstehenden Polschäfte werden durch vorab gewickelte Spulen bestückt,
d) das gesamte Blechpaket des Stators wird vergossen und/oder getränkt.

Das erfindungsgemäße Blechpaket eines Stators eines Elektromotors kann durch wenige und einfache Verfahrensschritte hergestellt werden. Damit ist dieses Verfahren einfach automatisierbar. Das Blechpaket des Stators weist aufgrund seines optimierten konstruktiven Aufbaus gegenüber herkömmlichen Elektromotoren vergleichbare elektromagnetische Eigenschaften auf, so daß keine Leistungseinbußen des Elektromotors zu verzeichnen sind. Das in einer vorgegebenen Reihenfolge der Blechlamellen paketierte Blechpaket des Stators, bedarfsweise unter Zuhilfenahme eines Montagedorns, weist nach innen (zum Luftspalt) oder nach außen ragende Polschäfte auf; je nachdem, ob die Blechlamellen der zusammenhängenden Pole an ihrem Außenumfang oder ihren Polschuhen miteinander verbunden sind.

Diese Polschäfte werden demnach vorzugsweise von innen oder außen mit Wicklungen versehen. Dabei sind sämtliche Wicklungsformen, -verschaltungen und-arten, wie z.B. eine Zweischicht-Bruchlochwicklungen einsetzbar.
Durch den Aufbau des Blechpakets des Stators lassen sich vorzugsweise als zu Zahnspulen entartete Polspulen auf die Polschäfte des Blechpakets setzen. Dabei können die Zahnspulen in Umfangsrichtung nahezu beliebig auf den Polschäften positioniert werden, um angestrebte Motoreigenschaften, wie z.B. reduzierte Drehmomentenwelligkeit zu erhalten.

Die Fixierung der Wicklungen erfolgt vorzugsweise durch Vergießen und Tränken des Blechpakets. Damit wird neben der mechanischen Fixierung und Kompaktierung des Blechpakets eine elektrische Isolierung der Wicklungen untereinander erreicht. Es sind ebenso statt dessen oder ergänzend, mechanische Fixierungen der Wicklungen z.B. in Form von Nutverschlußkeilen und/oder Polschuhen bei den von Innen zu bestückenden Polschäften einsetzbar.

Aus magnetischen Gründen u.a. um den Streufluß zu minimieren, weisen nur einzelne Blechlamellen eine magnetisch leitende Verbindung der Polschuhe auf. Andererseits weisen einzelne Blechlamellen, deren Polschuhe nicht magnetisch verbunden sind, eine derart optimierte Nutschlitzebreite zwischen den Polschuhen auf, daß dadurch Sättigungserscheinungen der Pole nahezu vermieden werden. Durch eine Schrägung der in axialer Richtung verlaufenden Nuten des Blechpakets des Stators, tritt außerdem eine Verringerung der Nutrastmomente ein. Außerdem können durch die Verbindungsstege zwischen den Polen einer derartigen Blechlamelle die im Betrieb des Motors zusätzlichen mechanischen und magnetischen Belastungen der einzelnen Pole dauerhaft in ihrer Position fixiert werden.

Durch die Anzahl von Eindrückungen pro Blechlamelle, läßt sich eine optimale Ausrichtung des gesamten Blechpakets bei gegenseitiger Winkelstellung der einzelnen Blechlamellen erreichen. Dabei sind vorzugsweise zwei Eindrückungen vorhanden, da weitere Eindrückungen eine statische Überbestimmtheit erzeugen, die einer optimalen Ausrichtung und gegenseitiger Winkelstellung der Blechlamellen entgegenwirkt.

Es ist aufgrund des modularen Aufbaus des Blechpakets keine Nachbearbeitung der Ständerbohrung erforderlich. Damit wird ein Bearbeitungsschritt eingespart, der in Form einer spanabhebenden Bearbeitung die Gefahr in sich birgt, Metallspäne im Blechpaket zu erzeugen. Derartige Metallspäne sind äußerst umständlich und zeitaufwendig aus dem Blechpaket zu entfernen, so daß immer die Gefahr einer Beeinträchtigung des Betriebs des Elektromotors besteht.

In einer weiteren Ausführungsform weisen die Blechlamellen einer ersten Schicht des Blechpaket eines Stators keine Eindrückungen, und die Blechlamellen einer letzten Schicht des Blechpaket des Stators keine Vorsprünge auf, so daß keine konstruktiven Einschränkungen, z.B. bei Anbau eines Lüfters oder einer Bremse in diesem Bereich notwendig sind, um optimale Eigenschaften des Elektromotors bei einem kompakten Aufbau zu realisieren.

In einer weiteren bevorzugten Ausführungsform wird das Blechpaket in ein Rückschlußjoch eingesetzt. Dabei sind sämtliche form- kraft-, und stoffschlüssigen Verbindungsarten oder deren Kombinationen möglich. Falls die Blechlamelle der zusammenhängenden Pole die Verbindung dieser Pole am Außenumfang aufweist, sind damit auch vorzugsweise gehäuselose Motoren realisierbar. Sowohl im Rückschlußjoch als auch bei den Blechlamellen selbst sind Kühlvorrichtungen für den Betrieb des Elektromotors vorgesehen. Vorzugsweise handelt es sich dabei um Kühlkanäle und/oder oberflächenvergrößernde Maßnahmen des Blechpakets.

Die Blechpakete sind in einer weiteren Ausführungsform in axiale und/oder kreissegmentähnliche Pakete unterteilt. Damit vereinfacht sich die Herstellung speziell großer Elektromotoren.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert. Darin zeigen:
- FIG 1: einen Querschnitt eines sternförmigen Blechpakets eines Stators,
- FIG 2: eine perspektivische Darstellung eines stern förmigen Blechpaket eines Stators,
- FIG 3: eine perspektivische Teilansicht des Blechpa kets,
- FIG 4: eine weitere perspektivische Teilansicht des Blechpakets.

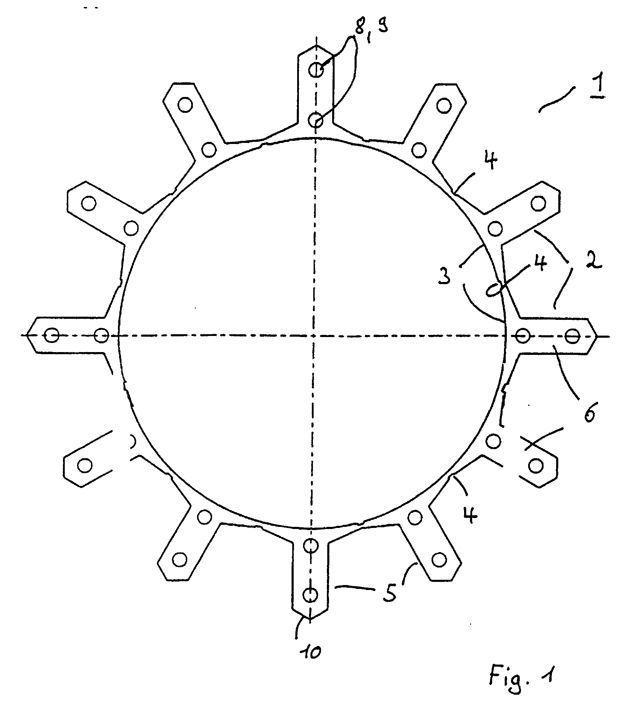

FIG 1 zeigt einen Querschnitt eines symmetrischen sternförmigen Blechpakets 1 eines Stators. Sternförmig angeordneten Pole 2 einer Blechlamelle 6 sind an ihren Polschuhen 3 in Umfangsrichtung durch Stege 4 verbunden und schließen dabei mit den Polschuhen 3 bzgl. einer einem Rotor zugewandten Seite bündig ab. Die Anordnung der Stege 4 ist auch radial weiter außen denkbar, so daß Nutschlitzansätze dem Rotor zugewandt sind. Ebenso entspricht vorzugsweise das Material der Stege dem der Polschuhe 3.

Einzelne Pole 7 sind auch durch magnetische oder amagnetische Klammern verbindbar.

Polschäfte 5 sind nach außen hin vorzugsweise dachförmig 10 ausgeführt, um so einen Wärmeschrumpfprozeß in ein nicht näher dargestelltes Rückschlußjoch zu ermöglichen und zu erleichtern und damit ein Verdrehen des sternförmigen Blechpakets 1 des Stators zu verhindern. Für Schrumpf-, oder Preßsitze sind die Polschäfte 5 radial nach außen derart geformt, daß eine formschlüssige Verbindung mit dem Rückschlußjoch entsteht. Zur Befestigung des sternförmigen Blechpakets 1 eines Stators ist auch eine Drehschnappverbindung des sternförmigen Blechpaket 1 im Rückschlußjoch möglich. Vorzugsweise sind dabei die Außenseiten der Polschäfte 5 ansatzweise konvex, vorzugsweise kreisbogenförmig ausgebildet, so daß das Rückschlußjoch durch diese Verbindung nur im elastischen Bereich verformt wird.

Durch Blechlamellen 6, die an den Polschuhen 3 in Umfangsrichtung verbunden sind, wird eine Vorabausrichtung der einzelnen Pole 7, die sich axial jeweils dazwischen befinden, auf dem Montagedorn erreicht. Durch Zwischenschalten derartiger, in Umfangsrichtung durch Blechlamellen 6 mit zusammenhängenden Polschuhen 3 kann im Blechpaket 1 eines Stators in vorgebbaren Abständen eine Zwischenausrichtung erreicht werden, so daß die Gesamtausrichtung des Blechpaket 1 optimiert wird. Eine Fixierung der Blechlamellen 6 des Blechpakets 1 erfolgt durch Vergießen und/oder Tränken.

Fig. 1 zeigt außerdem die vorzugsweise kreisähnlichen Eindrückungen 8 bzw. Vorsprünge 9 an einer Blechlamelle 6 mit zusammenhängenden Polschuhen 3.

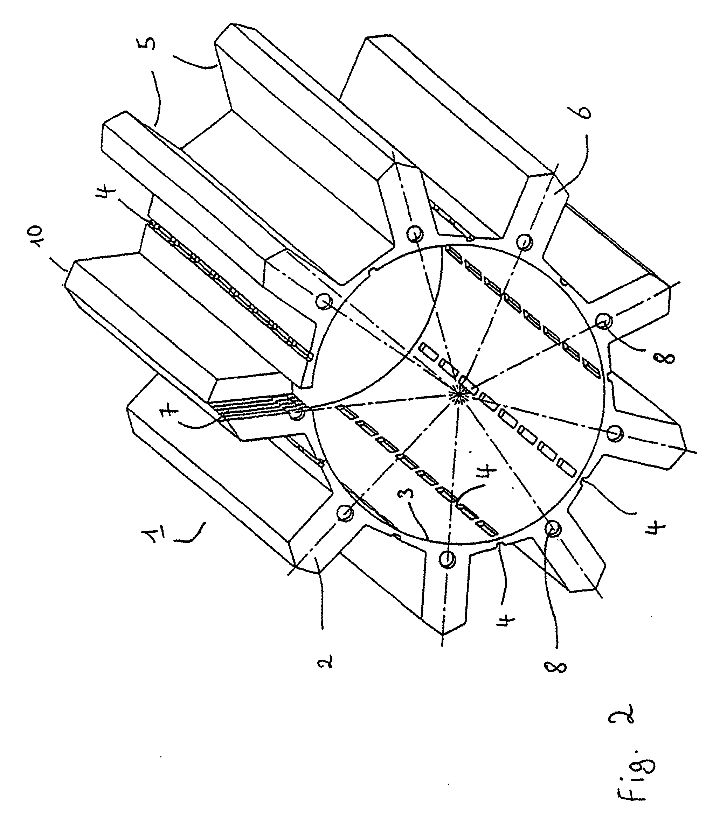

FIG 2 zeigt in perspektivische Darstellung das Blechpaket 1 des Stators die sternförmig Schichtung der Blechlamellen 6. Dabei ist in einem Teilschnitt einiger sternförmig angeordneter Blechlamellen 6 die Schichtung zu sehen. Es greifen die Eindrückungen 8 und Vorsprünge 9 einzelner Blechlemellen 6 ineinander, so daß ein dicht gepacktes radial unbewegliches Blechpaket 1 des Stators entsteht. Eine Weiterverfestigung des Blechpakets 1 entsteht durch Einfügung einzelner Blechlamellen 6 mit zusammenhängenden Polschuhen 3. Durch Vergießen und/oder Tränken des Blechpakets 1 erfolgt eine zusätzliche Fixierung.

Die prinzipielle Schichtung gestaltet sich wie folgt:
An den Stirnseiten des Blechpaket 1 eines Stators befinden sich jeweils in Umfangsrichtung des Stators eine Blechlamelle 6 mit Polen 2 mit zusammenhängenden Polschuhe 3. Dazwischen befinden sich Blechlamellen 6 einzelner Pole 7 , die in einem vorgebbaren axialen Abstand von vorzugsweise fünf Blechen durch eine Blechlamelle 6 , die radial zusammenhängende Polschuhe 3 aufweist, versteift werden. Pro Pol 2,7 sind auch mehrere Eindrückungen 8 oder ein Wechsel von Eindrückungen 8 und Vorsprüngen 9 auf jeder Seite möglich, um so das Blechpaket 1 des Stators radial zu fixieren. Die geometrische Form des Eindrucks 8 bzw. der Vorsprünge 9 spielt dabei eine untergeordnete technische Rolle und richtet sich u.a. wirtschaftlichen und technischen Gesichtspunkten des Herstellungsverfahrens. Es sind ebenso andere Verbindungen der Blechlamellen 6, wie z.B. hakenähnliche Verbindungen möglich.

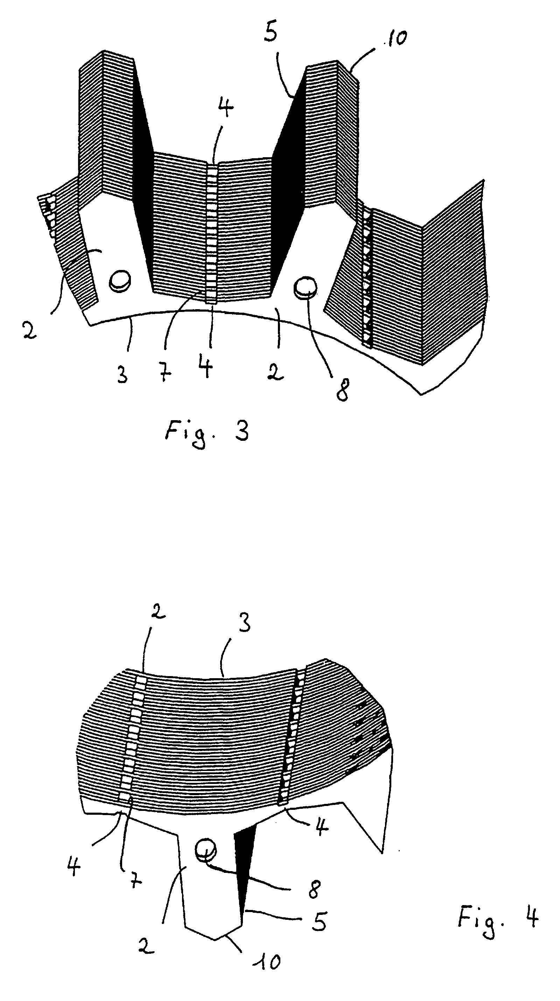

FIG 3 zeigt in einer perspektivischen Teilansicht des Blechpakets 1 des Stators die genauere Schichtung eines derartigen Blechpakets 1, wobei der Wechsel der unterschiedlichen Blechlamellen 6 , d.h. Pole 2 mit Stege 4, als auch einzelne Pole 7 deutlich erkennbar ist.

FIG 4 zeigt in einer weiteren perspektivischen Teilansicht des Blechpaket 1 des Stators aus Sicht der Ständerbohrung die Ausbildung der Stege 4. Es sind demnach sowohl Verbindungen der Polschuhe 3 möglich, die bzgl. der Ständerbohrung eine radiale Zurücksetzung der Stege 4 nach außen zulassen, als auch einen bündigen Abschluß mit der Ständerbohrung aufweisen. Je nach Montageverfahren, bietet sich die eine oder andere Möglichkeit der Verbindungen der Polschuhe 3 an.

## Patentansprüche

1. Elektromotor, der folgende Merkmale aufweist:
a) mindestens ein durch aufeinandergeschichteten Blechlamellen (6) gebildetes Blechpaket(1) eines Stators,
b) aus mechanischen einzelnen Polen (7) und in Umfangsrichtung des Stators zusammenhängenden Polen (2) bestehende Blechlamellen (6), mit zumindest einem Polschaft (5) und wenigstens einem einem Rotor zugewandten Polschuh (3),
c) Eindrückungen (8) der Blechlamellen (6) derart, daß die entgegengesetzten Seiten der Blechlamellen (6) Vorsprünge (9) aufweisen und dadurch die Blechlamellen (6) durch Ineinandergreifen ihrer Eindrücke (8) und Vorsprünge (9) das Blechpaket (1) des Stators bilden,
d) Wicklungen der mechanischen Pole (2, 7) des Blechpakets (1) des Stators,
e) Stege zwischen den Polen (2), die die zusammenhängenden mechanischen Pole (2) in Umfangsrichtung verbinden,
g) axiale Zusammensetzung der Blechlamellen (6) des Blechpakets des Stators weist einen vorgebbarer Wechsel von Polen (2) mit Verbindungssteg und Polen (7) ohne Verbindungssteg auf,
f) die Pole (2) mit Verbindungssteg weisen eine magnetisch leitfähige Verbindung im Bereich ihrer Polschuhe auf.

2. Elektromotor nach einem der vorhergehenden Ansprüche, **dadurch gekennzeichnet, daß** zumindest die Blechlamellen (6) einer axialen ersten und letzten Schicht des Blechpakets (1) des Stators Verbindungsstege aufweisen.

3. Elektromotor nach einem der vorhergehenden Ansprüche, **dadurch gekennzeichnet, daß** ein derartiges Blechpaket (1) in ein äußeres Rückschlußjoch einsetzbar ist.

4. Elektromotor nach Anspruch 3, **dadurch gekennzeichnet, daß** die radial nach außen weisenden Polschäfte durch eine form-, kraft-, oder stoffschlüssige Verbindung, oder eine Kombination dieser Verbindungsarten im Rückschlußjoch fixiert sind.

5. Verfahren zur Herstellung eines Blechpakets eines Stators nach Anspruch 1, **gekennzeichnet durch** folgende Schritte:
a) Herstellung der mechanischen einzelnen Pole (7) und/oder der in Umfangsrichtung zusammenhängenden Pole (2) **durch** Stanzen im Folgeschnittwerkzeug,
b) die **durch** Stanzen gebildeten Blechlamellen (6) werden in einer vorgebbaren Reihenfolge paketiert,
c) die nach außen und/oder innen im wesentlichen radial abstehenden Polschäfte werden **durch** vorab gewickelte Spulen bestückt,
d) das gesamte Blechpaket (1) des Stator wird vergossen und/oder getränkt.

6. Verfahren nach Anspruch 5, **dadurch gekennzeichnet, daß** das Blechpaket (1) des Stators in ein Rückschlußjoch eingesetzt wird.

## Claims

1. Electric motor which has the following features:
a) at least one laminated core (1) of a stator formed by stacked sheet-metal laminates (6),
b) sheet-metal laminates (6) comprising mechanical individual poles (7) and poles (2) which are connected in the circumferential direction of the stator, with at least one pole shaft (5) and at least one pole shoe (3) facing a rotor,
c) indentations (8) of the sheet-metal laminates (6) in such a way that the reverse sides of the sheet-metal laminates (6) have protrusions (9) and, as a result, the sheet-metal laminates (6) form the laminated core (1) of the stator by interengagement of their indentations (8) and protrusions (9),
d) windings of the magnetic poles (2, 7) of the laminated core (1) of the stator,
e) webs between the poles (2) which connect the connected mechanical poles (2) in the circumferential direction,
f) the poles (2) with connecting web feature a magnetically conductive connection in the area of their pole shoes,
g) the axial set-up of the sheet-metal laminates (6) of the laminated core of the stator has a predeterminable alternating succession of poles (2) with connecting web and poles (7) without connecting web.

2. Electric motor according to one of the preceding claims, **characterised in that** at least the sheet-metal laminates (6) of an axial first layer and last layer of the laminated core (1) of the stator have connecting webs.

3. Electric motor according to one of the preceding claims, **characterised in that** a laminated core (1) of this type can be fitted into an external magnetic yoke.

4. Electric motor according to Claim 3, **characterised in that** the radially outward-facing pole shafts are fixed in the magnetic yoke by a positive, non-positive or integral connection, or a combination of these types of connection.

5. Method of producing a laminated core of a stator according to Claim 1, **characterised by** the following steps:
a) production of the mechanical individual poles (7) and/or the poles (2) connected in the circumferential direction by stamping in a progressive die,
b) the sheet-metal laminates (6) formed by stamping are assembled in a predeterminable sequence,
c) the pole shafts protruding essentially radially outward and/or inward are provided with pre-wound coils,
d) the entire laminated core (1) of the stator is encapsulated and/or impregnated.

6. Method according to Claim 5, **characterised in that** the laminated core (1) of the stator is fitted into a magnetic yoke.

## Revendications

1. Moteur électrique qui comporte les caractéristiques suivantes :
a) au moins un paquet de tôles (1), formé par des lamelles de tôle (6) empilées les unes sur les autres, d'un stator,
b) des lamelles de tôle (6) constituées de pôles mécaniques individuels (7) et de pôles contigus (2) dans la direction circonférentielle du stator, avec au moins une tige polaire (5) et au moins une corne polaire (3) tournée vers un rotor,
c) des empreintes (8) dans les lamelles de tôle (6) de telle sorte que les côtés opposés des lamelles de tôles (6) comportent des reliefs (9) et que les lamelles de tôle (6) forment ainsi par interpénétration des empreintes (8) et des reliefs (9) le paquet de tôles (1) du stator,
d) des enroulements des pôles mécaniques (2, 7) du paquet de tôles (1) du stator,
e) des traverses entre les pôles (2) reliant dans la direction circonférentielle les pôles mécaniques contigus (2),
f) un assemblage axial des lamelles de tôle (6) du paquet de tôles du stator comportant une altemance pouvant être prescrite de pôles (2) avec traverse d'assemblage et de pôles (7) sans traverse d'assemblage,
g) les pôles (2) avec traverse d'assemblage comportent dans la zone de leurs cornes polaires une liaison magnétiquement conductrice.

2. Moteur électrique selon la revendication précédente, **caractérisé par le fait qu'**au moins les lamelles de tôle (6) d'une première couche axiale et d'une dernière couche axiale du paquet de tôles (1) du stator comportent des traverses d'assemblage.

3. Moteur électrique selon l'une des revendications précédentes, **caractérisé par le fait qu'**un paquet de tôles (1) de ce genre peut être monté dans un inducteur blindé extérieur.

4. Moteur électrique selon la revendication 3, **caractérisé par le fait que** les tiges polaires s'étendant radialement vers l'extérieur sont fixées dans l'inducteur blindé par un assemblage par concordance de formes, par adhérence ou par concordance de matériaux ou par une combinaison de ces types d'assemblage.

5. Procédé pour la fabrication d'un paquet de tôles d'un stator selon la revendication 1, **caractérisé par** les étapes suivantes :
a) fabrication des pôles mécaniques individuels (7) et/ou des pôles contigus dans la direction circonférentielle (2) par estampage dans l'outil à découpes à suivre,
b) les lamelles de tôle (6) formées par estampage sont empilées dans un ordre pouvant être prescrit,
c) les tiges polaires dépassant globalement radialement vers l'extérieur et/ou vers l'intérieur sont équipées de bobines préalablement enroulées,
d) l'ensemble du paquet de tôles (1) du stator est scellé et/ou imprégné.

6. Procédé selon la revendication 5, **caractérisé par le fait que** le paquet de tôles (1) du stator est monté dans un inducteur blindé.
